(19) Europäisches Patentamt
European Patent Office
Office européen des brevets

(11) **EP 2 467 931 B1**

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(21) Anmeldenummer: **10726114.1**

(22) Anmeldetag: **25.06.2010**

(51) Int Cl.:
*H02P 6/18* *(2006.01)*    *G05B 11/28* *(2006.01)*
*G05B 13/04* *(2006.01)*

(86) Internationale Anmeldenummer:
**PCT/EP2010/059077**

(87) Internationale Veröffentlichungsnummer:
**WO 2011/020638 (24.02.2011 Gazette 2011/08)**

(54) **VERFAHREN UND VORRICHTUNG ZUM BETREIBEN EINES ELEKTROMOTORS**

METHOD AND DEVICE FOR OPERATING AN ELECTRIC MOTOR

PROCEDE ET DISPOSITIF DE COMMANDE D'UN MOTEUR ELECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.08.2009 DE 102009028746**

(43) Veröffentlichungstag der Anmeldung:
**27.06.2012 Patentblatt 2012/26**

(73) Patentinhaber: **Robert Bosch GmbH**
**70442 Stuttgart (DE)**

(72) Erfinder: **FRICKER, David**
**F-67240 Oberhoffen Sur Moder (FR)**

(56) Entgegenhaltungen:
**EP-A1- 1 383 231    WO-A2-2007/026241**
**DE-A1- 4 330 944    JP-A- 5 328 773**
**JP-A- 2001 113 082**

**Beschreibung**

Technisches Gebiet

Die Erfindung betrifft ein Verfahren zum Betreiben einer permanentmagneterregten Synchronmaschine, insbesondere ein Verfahren zum Einstellen eines Stromprofils in einer solchen Synchronmaschine.

Stand der Technik

Für die Ansteuerung von permanentmagneterregten Synchronmaschinen ist es bekannt, ein Stromprofil an die einzelnen Phasen der Synchronmaschine anzulegen. Das Stromprofil definiert gewünschte betriebspunktabhängige Phasenströme für jede Motorphase an einer bestimmten Läuferlage (Lagewinkel) bzw. einen gewünschten betriebspunktabhängigen Verlauf des Stromflusses in bestimmen Lagewinkeibereichen des Läufers der Synchronmaschine. Die Phasenströme an dem bestimmten Lagewinkel bzw. in dem bestimmten Lagewinkelbereich werden durch Anlegen von Phasenspannungen eingestellt, die während sich der Läufer in dem bestimmten Lagewinkelbereich befindet, jeweils als konstant festgelegt sind. Die Phasenspannungen können mit Hilfe einer geeigneten Treiberschaltung, wie beispielsweise einer H-Brückenschaltung oder einer B6-Treiberschaltung, bereitgestellt werden. Der Betrieb eines bürstenlosen Gleichstrommotors mit Hilfe von Phasenstromprofilen ist z.B. Gegenstand der Dokumente WO2007026241 und JP2001113082.

Die Parametrisierung der in den einzelnen Lagewinkelbereichen anzulegenden Phasenspannungen wird bislang empirisch durchgeführt. Dabei werden insbesondere der aus dem Anlegen einer jeweiligen Phasenspannung in einem Lagewinkelbereich resultierende Stromanstieg, das Stromplateau und der Stromabfall parametrisiert. Dies ist aufwändig und eine z.B. alterungsbedingte Änderung von elektrischen Eigenschaften der Synchronmaschine erfordert eine erneute Parametrisierung.

Das möglichst genaue Einstellen eines vorgegebenen Stromprofils für den Betrieb der Synchronmaschine ist notwendig, um die Geräuschentwicklung beim Betrieb der Synchronmaschine möglichst gering halten zu können. Häufig wird dazu einer oder mehrere der Phasenströme gemessen und durch eine geeignete Stromregelung, z.B. durch Anpassung der entsprechenden Phasenspannung der entsprechende Phasenstrom an den gewünschten, vorgegebenen Phasenstrom angepasst. Das Vorsehen einer derartigen Stromregelung zum Einstellen der Phasenströme gemäß einem Stromprofil ist jedoch aufwändig zu realisieren und kann u.U. zu instabilem Betriebszuständen führen.

Es ist daher Aufgabe der vorliegenden Erfindung, ein Verfahren und eine Vorrichtung zum Betreiben einer permanentmagneterregten Synchronmaschine zur Verfügung zu stellen, wobei die anzulegenden Phasenspannungen festgelegt werden, um ein beliebiges Stromprofil vorzugehen. Insbesondere ist es Aufgabe der vorliegenden Erfindung, das Einstellen des Stroms in einem gesteuerten Betrieb ohne Durchführen einer Strommessung vornehmen zu können.

Offenbarung der Erfindung

Diese Aufgabe wird durch das Verfahren zum Betreiben einer Synchronmaschine gemäß Anspruch 1 sowie durch die Vorrichtung gemäß dem nebengeordneten Anspruch gelöst.

Weitere vorteilhafte Ausgestaltungen sind in den abhängigen Ansprüchen angegeben.

Gemäß einem ersten Aspekt ist ein Verfahren zum Betreiben einer mehrphasigen elektrischen Maschine durch Anlegen von variablen Phasenspannungen vorgesehen. Das Verfahren umfasst die folgenden Schritte:

- Bereitstellen eines Phasenstromprofils, das für jede Phase der elektrischen Maschine, einen Läuferlage abhängigen Verlauf des jeweiligen Phasenstroms angibt;
- Ermitteln der während eines vorgegebenen Zeitfensters anzulegenden konstanten Phasenspannung für jede Phase abhängig von einer Phasenstromangabe, die einen linearisierten Verlauf des anzulegenden Phasenstroms zwischen dem durch das Phasenstromprofil vorgegebenen Phasenstrom der Phase zu Beginn des vorgegebenen Zeitfensters und der durch das Phasenstromprofil vorgegebene Phasenstrom der Phase am Ende des vorgegebenen Zeitfensters angibt, wobei die anzulegende Phasenspannung für jede Phase weiterhin abhängig von einer geschätzten Änderung eines jeweiligen magnetischen Flusses ermittelt wird, wobei die Änderungen der magnetischen Flüsse anhand der durch das Phasenstromprofil vorgegebenen Phasenströme ermittelt werden.

Ziel des obigen Verfahrens ist es, bei Vorgabe eines Stromprofils, das einen Stromverlauf über der Läuferlage der elektrischen Maschine angibt, die Phasenspannungen bereitzustellen, mit denen das vorgegebene Stromprofil erreicht werden kann. Dies soll ohne Phasenstrommessung erfolgen, so dass das Einstellen des Stroms im gesteuerten Betrieb möglich ist. Dies wird erreicht, indem das Stromprofil abschnittsweise als lineare Stromverläufe angenommen wird und die Phasenspannung abhängig von der Phasenstromangabe ermittelt und angelegt wird.

Weiterhin kann der Verlauf des Phasenstroms in dem vorgegebenen Zeitfenster als Mittelwert des Phasenstroms in dem vorgegebenen Zeitfenster angegeben werden. Insbesondere kann der Mittelwert des während des vorgegebenen Zeitfensters anzulegenden Phasenstroms einer Phase ermittelt werden, indem der durch das Phasenstromprofil vorgegebene Phasenstrom der Phase zu Beginn des Zeitfenster und der durch das Phasenstromprofil vorgegebene Phasenstrom der Phase am Ende des Zeitfenster addiert und halbiert werden.

Die Phasenspannung kann so weiterhin unter Berücksichtigung der Flussverkettung des Permanentmagneten und den Selbst- und Koppelinduktivitäten unter Zuhilfenahme der Motorgleichung ermittelt werden. Dadurch kann auf eine aufwändige Parametrisierung verzichtet werden, da lediglich die Selbst- und Koppelinduktivität der einzelnen Stränge der elektrischen Maschine sowie die Flussverkettung der Permanentmagneten benötigt wird.

Insbesondere kann die Änderung eines magnetischen Flusses weiterhin abhängig von der Läuferlage geschätzt werden. Dazu kann vorgesehen sein, dass die Änderung eines magnetischen Flusses als Differenz eines geschätzten magnetischen Flusses am Ende des vorgegebenen Zeitfensters und eines geschätzten magnetischen Flusses zu Beginn des vorgegebenen Zeitfensters ermittelt wird.

Insbesondere kann eine Läuferlage eines Läufers der elektrischen Maschine bestimmt werden, wobei die Änderung eines einer der Phasen zugeordneten magnetischen Flusses durch die Summe einer Verkettung der magnetischen Flüsse der Permanentmagneten, der von der Läuferlage abhängt, und der von den bestromten Phasenwicklungen hervorgerufenen magnetischen Flüsse, die von der Läuferläge und von dem Phasenstrom der Phase abhängen, ermittelt wird, wobei die von den bestromten Phasenwicklungen hervorgerufenen magnetischen Flüsse mit Hilfe der durch das Phasenstromprofil vorgegebenen Phasenströme der Phase geschätzt werden.

Insbesondere kann vorgesehen sein, dass bei dem Ermitteln der Änderung des einer der Phasen zugeordneten magnetischen Flusses die von den bestromten Phasenwicklungen hervorgerufenen magnetischen Flüsse vernachlässigt werden, wenn die Drehzahl eine Drehzahlschwellenwert unterschreitet.

Weiterhin kann die anzulegende Phasenspannung einer Phase als Änderung eines der Phase zugeordneten magnetischen Flusses dividiert durch die Zeitdauer des vorgegebenen Zeitfensters ermittelt werden.

Es kann vorgesehen sein, dass die anzulegende Phasenspannung einer Phase als Summe der Änderung eines der Phase zugeordneten magnetischen Flusses dividiert durch die Zeitdauer des vorgegebenen Zeitfensters und des Produkts des Mittelwerts des während des vorgegebenen Zeitfensters anzulegenden Phasenstromes der Phase mit einem Wicklungswiderstand ermittelt wird.

Gemäß einem weiteren Aspekt ist eine Vorrichtung zum Betreiben einer mehrphasigen elektrischen Maschine durch Bereitstellen von variablen Phasenspannungen vorgesehen. Die Vorrichtung ist ausgebildet,

- um ein Phasenstromprofil bereitzustellen, das für jede Phase der elektrischen Maschine, einen Läuferlage abhängigen Verlauf des jeweiligen Phasenstroms angibt;
- die während eines vorgegebenen Zeitfensters anzulegende konstante Phasenspannung für jede Phase abhängig von einer Phasenstromangabe, die einen linearisierten Verlauf des anzulegenden Phasenstroms zwischen dem durch das Phasenstromprofil vorgegebenen Phasenstrom der Phase zu Beginn des vorgegebenen Zeitfensters und der durch das Phasenstromprofil vorgegebene Phasenstrom der Phase am Ende des vorgegebenen Zeitfensters angibt, zu ermitteln.

Gemäß einem weiteren Aspekt ist ein Computerprogrammprodukt vorgesehen, das ein Computerprogramm enthält, das, wenn es auf einer Datenverarbeitungseinheit ausgeführt wird, das obige Verfahren ausführt.

Kurzbeschreibung der Zeichnungen

Ausführungsformen für ein Verfahren und eine Vorrichtung zum Betreiben einer elektrischen Maschine werden nachfolgend anhand der beigefügten Zeichnungen näher erläutert. Es zeigen:

Figur 1 einen Querschnitt durch eine Synchronmaschine;

Figur 2a und 2b eine zweiphasige bzw. dreiphasige Treiberschaltung für Synchronmaschinen;

Figur 3 die Verläufe einer Phasenspannung, eines Phasenstroms sowie einer phasenbezogenen Flussverkettung zur Veranschaulichung der Annahmen als Grundlage des Verfahrens zum Betreiben des Synchronmotors;

Figur 4 ein Diagramm zur Darstellung der Phasenspannung der Phasenströme der induzierten Spannung sowie der phasenbezogenen Flussverkettung für eine beispielhafte Synchronmaschine bei Anwendung des Verfahrens zum Betreiben der Synchronmaschine.

Beschreibung von Ausführungsformen

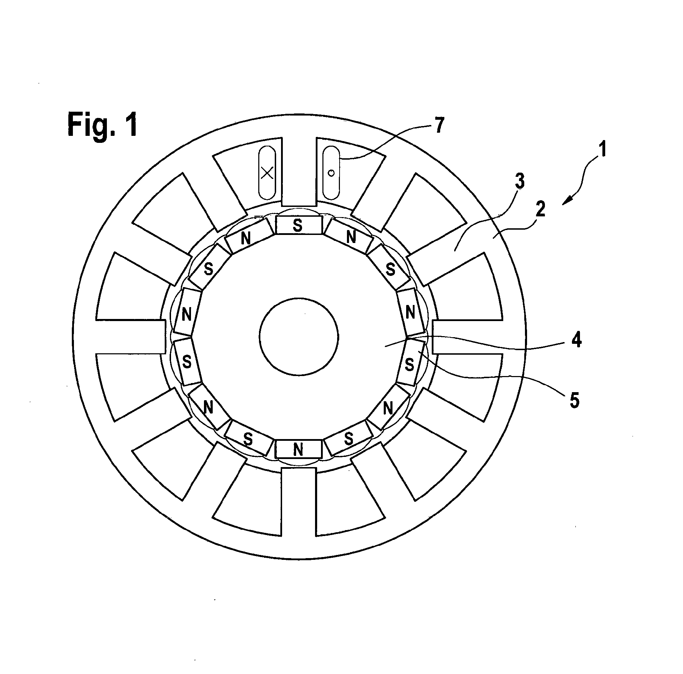

In Figur 1 ist eine schematische Querschnittsdarstellung einer Synchronmaschine 1 dargestellt. Die Synchronmaschine 1 umfasst eine Statoranordnung 2 mit einer kreisförmigen Ausnehmung, in der konzentrisch ein Rotor 4 um eine Rotorwelle drehbeweglich angeordnet ist. Die Statoranordnung 2 weist im gezeigten Beispiel 12 radial nach innen gerichtete Statorzähne 3 auf. Auch andere Anzahlen von Statorzähnen 3 sind möglich.

Die Statorzähne 3 der Statoranordnung 2 sind jeweils mit Statorspulen 7 versehen. Je nach Anzahl von Phasen P1, P2, P3 der Synchronmaschine 1 sind die Statorspulen 7 in zwei, drei oder mehr als drei Gruppen in Stern- bzw. in Dreiecksschaltung miteinander verschaltet (nicht gezeigt), um einen mehrphasigen Betrieb der Synchronmaschine 1 zu ermöglichen. Die möglichen Verschaltungen der Statorspulen 7 sind aus dem Stand der Technik bekannt und es wird hierin nicht näher darauf eingegangen.

Im gezeigten Ausführungsbeispiel weist der Rotor 4 14 Permanentmagneten 5 auf, so dass die entsprechenden Rotorpole gebildet werden, die mit "S" und "N" gekennzeichnet werden. Das von den Rotorpolen gebildete Erregermagnetfeld ist radial nach außen gerichtet. Auch andere Anzahlen von Permanentmagneten und/oder Rotorpolen können vorgesehen werden.

Durch geeignetes Ansteuern der Statorspulen 7 können Magnetfelder erzeugt werden, die mit den durch die Permanentmagneten 5 des Rotors 4 erzeugten Magnetfeldern wechselwirken und den Rotor 4 dadurch antreiben.

Die in Figur 1 dargestellte Synchronmaschine 1 ist nur beispielhaft beschrieben und in Verbindung mit dem nachfolgend beschriebenen Verfahren kann im Allgemeinen jede elektrische Maschine, die eine Statoranordnung mit Statorspulen aufweist, mit dem Betriebsverfahren betrieben werden.

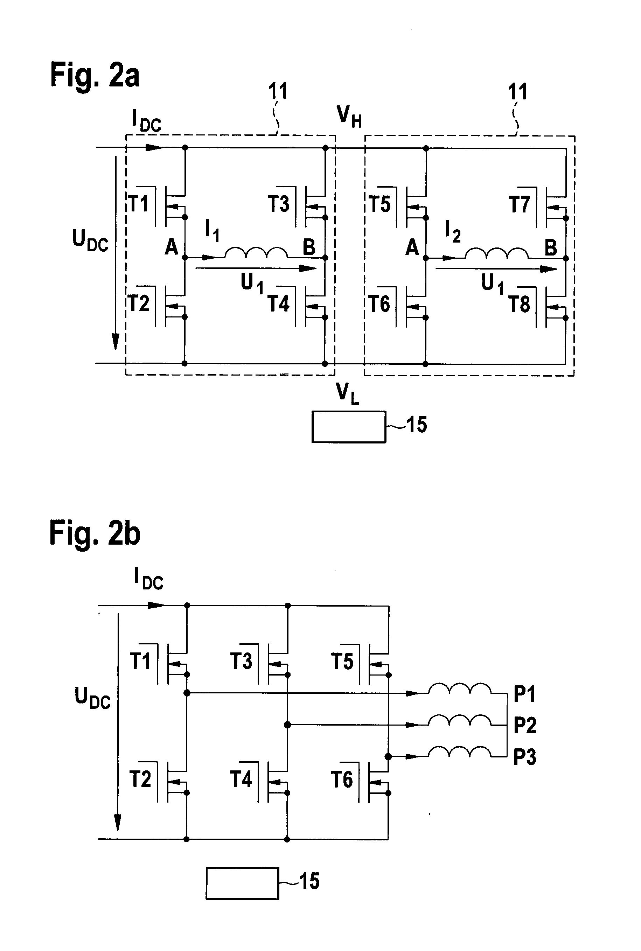

Die Ansteuerung der Statorspulen 7 erfolgt mit Hilfe einer Treiberschaltung, über die jeweils eine geeignete Phasenspannung an die entsprechenden Statorspulen 7 bzw. an die entsprechende Zusammenschaltung von Statorspulen 7 angelegt wird. In den Figuren 2a und 2b sind zwei mögliche Beispiele von Treiberschaltungen dargestellt.

In Figur 2a ist eine 2H-Treiberschaltung gezeigt, mit der eine zweiphasige Synchronmaschine betrieben werden kann. Die 2H-Treiberschaltung weist zwei separat ansteuerbare H-Brückenschaltungen 11 auf, die jeweils aus zwei in Serie geschalteten Leistungshalbleiterschaltern T1, T2; T3, T4; T5, T6; T7, T8 aufgebaut sind. Zwischen Knoten zwischen den Leistungshalbleiterschaltern von jeweils zwei Serienschaltungen jeder H-Brückenschaltung wird eine zugeordnete Phasenspannung abgegriffen.

Im Detail umfasst eine erste der H-Brückenschaltungen 11 einen ersten Leistungstransistor T1, dessen erster Anschluss mit einem hohen Versorgungspotential $V_H$ und dessen zweiter Anschluss mit einem ersten Ausgangsknoten A verbunden ist. Ein zweiter Leistungstransistor T2 ist mit einem ersten Anschluss mit dem ersten Ausgangsknoten A und mit einem zweiten Anschluss mit einem niedrigen Versorgungspotential $V_L$ verbunden. Die zweite Serienschaltung der H-Brückenschaltung 11 ist mit den Leistungstransistoren T3, T4 analog aufgebaut, zwischen denen ein Knoten B als zweiter Ausgangsanschluss vorgesehen ist. Die zweite H-Brückenschaltung 11 ist ebenfalls analog zur ersten H-Brückenschaltung 11 mit zwei Serienschaltungen mit den Leistungstransistoren T5 bis T8 aufgebaut.

Mit Hilfe eines Steuergeräts 15 werden die einzelnen Leistungshalbleiterschalter T1 bis T8 angesteuert. Zum Bereitstellen einer Phasenspannung an den jeweiligen Phasenausgängen der H-Brückenschaltungen 11 kann durch Schließen (Durchschalten, leitend Schalten) des ersten Leistungshalbleiterschalters T1 und des vierten Leistungshalbleiterschalters T4 und bei geöffnetem zweiten und dritten Leistungshalbleiterschalter T2, T3 die positive Versorgungsspannung $U_{DC}$ und durch Schließen des zweiten und dritten Leistungshalbleiterschalters T2, T3 bei geöffnetem ersten und vierten Leistungshalbleiterschalter T1, T4 eine negative Versorgungsspannung $-U_{DC}$ angelegt werden. Zum Bereitstellen einer Spannung von 0V als Phasenspannung am Ausgang der H-Brückenschaltung 11 können entweder der erste und der dritte Leistungshalbleiterschalter T1, T3 durchgeschaltet (bei geöffneten Leistungshalbleiterschaltern T2 und T4) oder der zweite und vierte Leistungshalbleiterschalter bei geöffneten Leistungshalbleiterschaltern T1 und T3 geschlossen werden.

Phasenspannungen mit Spannungsniveaus zwischen der positiven Versorgungsspannung $U_{DC}$ und der negativen Versorgungsspannung $-U_{DC}$ können durch eine geeignete Ansteuerung der Leistungshalbleiterschalter T1 - T8 z.B. gemäß einem durch das Steuergerät 15 betriebenen Pulsweitenmodulationsverfahren erzeugt werden. Dabei werden innerhalb einer vorgegebenen Periodendauer, die deutlich kleiner ist als die Zeitdauer, während der eine konstante Phasenspannung angelegt werden soll, z.B. während eines ersten Zeitfensters innerhalb der Periodendauer die positive Versorgungsspannung $U_{DC}$ und während eines zweiten Zeitfensters bis zum Ende der Periodendauer die Spannung von 0V an den Ausgang der H-Brückenschaltung 11 angelegt. Das Tastverhältnis, d.h. das Verhältnis der Zeitdauer des ersten Zeitfensters zur Periodendauer (Summe der Dauer des ersten Zeitfensters und des zweiten Zeitfensters) bestimmt die effektive, an den Ausgang der H-Brückenschaltung 11 angelegte Phasenspannung.

In Figur 2b ist eine weitere Treiberschaltung in einer B6-Topologie dargestellt. Die Treiberschaltung der B6-Topologie dient zur Ansteuerung einer dreiphasigen Synchronmaschine. Die B6-Treiberschaltung weist drei Serienschaltungen aus jeweils zwei Leistungshalbleiterschaltern T1 bis T6 auf, wobei der zwischen den beiden Leistungshalbleiterschaltern einer Serienschaltung befindliche Knoten einen Phasenausgang der B6-Treiberschaltung darstellt. Diese Phasenausgänge werden mit den jeweiligen Motoranschlüssen einer dreiphasigen Synchronmaschine verbunden. Die B6-Treiberschaltung ist durch Hinzufügen von Serienschaltungen für Synchronmaschinen auch mit einer anderen Anzahl von Phasen skalierbar.

Auch bei der B6-Treiberschaltung kann die jeweilige Phasenspannung durch Einstellen der effektiven Spannung mit Hilfe eines in dem Steuergerät 15 betriebenen Pulsweitenmodulationsverfahrens eingestellt werden. Aus den Phasenspannungen können die Spannungsunterschiede der Phasenanschlüsse der Synchronmaschine 1 berechnet werden. Die Spannungen der Phasenanschlüsse können anschließend um eine geeignete identische Spannung verschoben werden, so dass jede Spannung in dem Bereich zwischen 0V und der Spannungsversorgung $U_{DC}$ über das Tastverhältnis eingestellt werden kann. Das Tastverhältnis, mit dem die beiden Leistungshalbleiterschalter einer Serienschaltung angesteuert werden, bestimmt die an den jeweiligen Phasenanschluss der Synchronmaschine 1 angelegte mittlere Spannung.

Zum Betrieb einer in Figur 1 gezeigten Synchronmaschine 1 ist es erforderlich, ein bestimmtes Stromprofil für die Phasenströme einzustellen. Das Stromprofil gibt den Stromverlauf über der Rotorlage der Synchronmaschine 1 an. Das Stromprofil ist im Wesentlichen betriebspunktabhängig und hängt insbesondere von dem bereitzustellenden Drehmoment, der aktuellen Drehzahl sowie charakteristischen Parametern der Synchronmaschine in bekanntem Maße ab. Für diese Beschreibung wird davon ausgegangen, dass das Stromprofil zum Ansteuern der Synchronmaschine 1 von einem übergeordneten Steuergerät 15 vorgegeben wird.

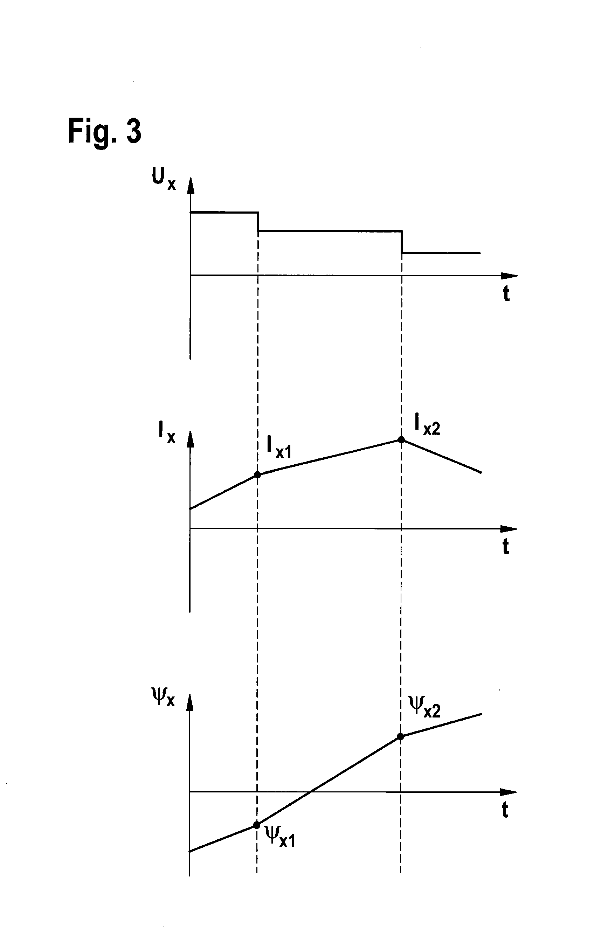

Zum Einstellen eines bestimmten Stromprofils, mit dem die Synchronmaschine angesteuert werden soll, müssen bestimmte Phasenspannungen an die Synchronmaschine angelegt werden. In der Regel werden die Phasenspannungen in aufeinanderfolgenden Zeitfenstern als konstante Spannungen angelegt. Im Folgenden wird das Prinzip zur Ermittlung des jeweiligen anzulegenden Phasenstroms anhand der Skizze der Figur 3 allgemein dargestellt.

Für eine n-strängige Maschine, d.h. eine elektrische Maschine mit n Phasen, existiert ein Stromvektor **I** = [I1, ..., In], der sich über einen Spannungsvektor **U** = [U1, ... , Un] einer mittleren Spannung, die als Phasenspannung vorgegeben wird, einstellt. Zur Bestimmung der notwendigen Stellspannung, bei der man in einem vorgegebenen Stromprofil von einem Zustand 1 (**I**1, $\alpha_1$) (I1: Stromvektor bei einem ersten Zustand 1, $\alpha_1$: Winkellage des Rotors bei dem ersten Zustand 1), zu einem Zustand 2 (I2: Stromvektor bei einem zweiten Zustand 2, $\alpha_2$: Winkellage des Rotors bei dem zweiten Zustand 2) gelangt, gilt für jede Phase x der elektrischen Maschine die folgende Gleichung:

$$U_x = R \cdot I_x + d\psi_x/dt \qquad\qquad (1).$$

wobei x der jeweiligen Phase entspricht.

Die Integration der Gleichung (1) zwischen einem ersten Zeitpunkt t1, der dem Zeitpunkt des Zustands 1 entspricht, zu dem der Rotor der elektrischen Maschine die Winkellage $\alpha1$ einnimmt, und dem zweiten Zeitpunkt t2, der dem Zeitpunkt des Zustands 2 entspricht, zu dem der Rotor (Läufer) der elektrischen Maschine die Winkellage $\alpha2$ einnimmt, ergibt sich:

$$\int_{t1}^{t2} U_x\, dt = R \cdot \int_{t1}^{t2} I_x\, dt + \int_{t1}^{t2} d\psi_x/dt\, dt \qquad\qquad (2)$$

Da während der Integrationswege die einzustellende Phasenspannung konstant ist und man für den Stromverlauf gemäß dem Stromprofil zwischen dem ersten Zeitpunkt und dem zweiten Zeitpunkt einen linearen Verlauf annimmt, gilt entsprechend:

$$U_x \Delta t = R \cdot \frac{I_{x1} + I_{x2}}{2} \Delta t + \psi_x(\mathbf{I2}, \alpha_2) - \psi_x(\mathbf{I1}, \alpha_1) \qquad\qquad (3).$$

Man erhält:

$$U_x = R \cdot \frac{i_{x1} + i_{x2}}{2} + \frac{\psi_x(\mathbf{I2}, \alpha_2) - \psi_x(\mathbf{I1}, \alpha_1)}{\Delta t} \tag{4}.$$

Mit Kenntnis der notwendigen Zeit $\Delta t$, die benötigt wird, um von dem Zustand 1 zum Zustand 2 zu gelangen, kann die Spannung Ux für jede Phase (x = 1, 2, ..., n) ausgerechnet werden, die von dem Stromvektor **I1** bei der ersten Winkellage $\alpha_1$ zu dem Stromvektor **I2** bei der zweiten Winkellage $\alpha_2$ führen wird.

Treten keine Sättigungen des Magnetkreises auf, kann die Flussverkettung $\psi$ der einzelnen Phasen x in Abhängigkeit der Flussverkettung der Permanentmagneten $\psi_{pm}(\alpha)$ und der gegebenenfalls positionsabhängigen Induktivitätsmatrix $L(\alpha)$ wie folgt angenommen werden:

$$\psi = \psi_{pm}(\alpha) \cdot L(\alpha) \cdot I \tag{5}$$

Beispielsweise für eine dreiphasige elektrische Maschine gilt:

$$\psi_1 = \psi_{pm1}(\alpha) + L_1(\alpha) \cdot I_1 + M_{12} \cdot I_2 + M_{13} \cdot I_3$$

$$\psi_2 = \psi_{pm2}(\alpha) + L_2(\alpha) \cdot I_2 + M_{21} \cdot I_1 + M_{23} \cdot I_3$$

$$\psi_3 = \psi_{pm3}(\alpha) + L_3(\alpha) \cdot I_3 + M_{31} \cdot I_1 + M_{32} \cdot I_2$$

wobei L der Selbstinduktivität und $M_{ab}$ der Koppelinduktivität zwischen der Phase a und der Phase b entsprechen.

Bei einer symmetrischen elektrischen Maschine, die keine ausgeprägte magnetische Positionsabhängigkeit aufweist, können die Selbst- und Koppelinduktivitäten L, M als identisch angenommen werden. Unabhängig von der Anzahl der Phasen kann weiterhin vereinfachend vorgegeben werden, dass zu jedem Berechnungszeitpunkt, der durch das Stromprofil vorgegeben wird, lediglich zwei Ströme in zwei Phasensträngen fließen, nämlich $I_{soll}$, $-I_{soll}$. Das heißt ein Strom fließt in einen Phasenstrang der elektrischen Maschine hinein und aus einem weiteren der Phasenstränge der elektrischen Maschine wieder heraus. Diese Vereinfachung ermöglicht es, den Fluss des Stroms bei der mit Strom beaufschlagten Phase zu berechnen, wie folgt:

$$\psi_1(\alpha) = \psi_{pm1}(\alpha) + (L - M) \cdot I_{soll} \tag{7}$$

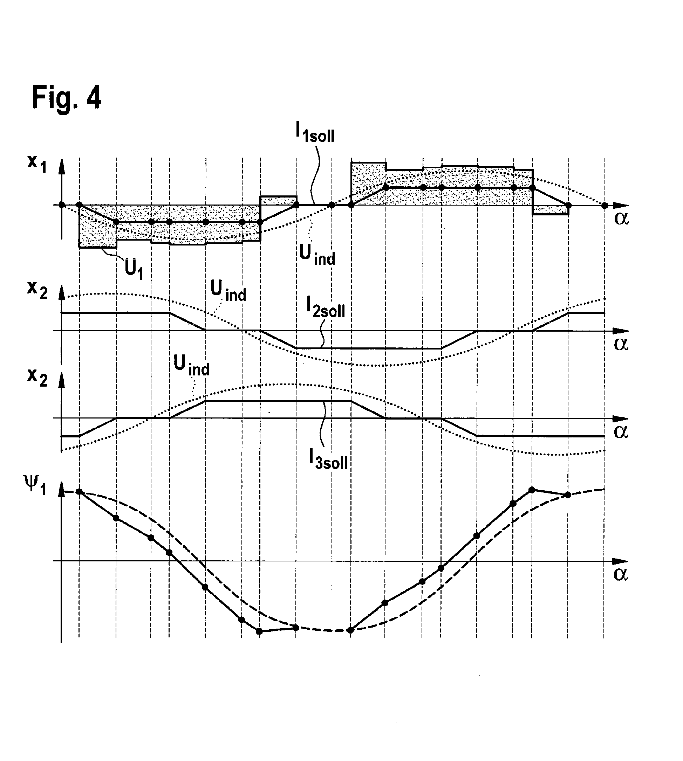

In Figur 4 sind die zeitlichen Verläufe der gewünschten Phasenströme $I_{1Soll}$, $I_{2Soll}$, $I_{3Soll}$, der induzierten Spannung $U_{ind}$ der Phasenspannung der ersten Phase und des Flusses $\psi$ der ersten Phase dargestellt. In Figur 4 sind die Stützstellen des Stromprofils vorgegeben und durch die fett gezeichnete Linie durch lineare Verbindungslinien, die den gewünschten Stromverlauf angeben, miteinander verbunden. Die grauen Flächen geben jeweils die während der durch die Stützstellen des jeweiligen Phasenstromes definierten Teilflächen angelegte Phasenspannung an. Die gestrichelte Linie gibt jeweils die induzierte Spannung $U_{ind}$ jeder Phase an.

Wie aus Figur 4 ersichtlich ist, kann für jede Stützstelle ein entsprechender Fluss $\psi_x$ einer Phase x berechnet werden. Die Berechnung erfolgt gemäß Gleichung (7) anhand der positionsabhängigen Flussverkettung $\psi_{pmx}(\alpha)$ der Permanentmagneten und der Selbst- und Koppelinduktivitäten L, M der elektrischen Maschine. Die so durch die Gleichung (4) ermittelte Phasenspannung $U_x$, die bei Vorgabe des Stromprofils bzw. der entsprechenden Stützstellen aus dem Stromprofil errechnet werden kann, kann zu den jeweiligen Zeitpunkten, die den Stützstellen entsprechen, angelegt werden und bis zum Zeitpunkt der nächsten Stützstelle gemäß dem Stromprofil angelegt bleiben.

Zur Implementierung einer abgetasteten Steuerung kann zum Zeitpunkt $t_0$ die geschätzte Winkellage $\alpha_{t0} + Ts$ des nächsten Abtastzeitpunkts errechnet werden. Dies kann beispielsweise mit Hilfe einer Drehzahlextrapolation gemäß folgender Gleichung durchgeführt werden:

$$\alpha_{t0+Ts} = \alpha_{t0} + \omega_{t0} \cdot T_S \qquad\qquad (8)$$

wobei $\omega_{t0}$ der momentanen Drehzahl (als Winkelgeschwindigkeit) und $T_S$ der Zeitperiode zwischen den Abtastungen entsprechen. Daraus kann der nächste Sollstromvektor $I_{t0+Ts}$ gemäß dem vorgegebenen Stromprofil ermittelt werden. Das Stromprofil kann gemäß einer Lookup-Tabelle oder gemäß einer betriebspunktabhängigen Funktion vorgegeben werden.

Der Vektor der Sollflussverkettung $\psi_{t0+Ts}$ kann dann mit der folgenden Gleichung bestimmt werden:

$$\psi_{t0+Ts} = \psi_{pm1}(\alpha_{t0+Ts}) + (L(\alpha_{t0+Ts}) \cdot I_{t0+Ts}$$

Indem der Zeitunterschied $\Delta t$ mit der Abtastperiode $T_S$ in Gleichung (4) gleichgesetzt wird, erhält man folgende Gleichung:

$$U_{t0} = R \cdot \frac{I_{t0} + I_{t0+Ts}}{2} + \frac{\psi_{t0+Ts}(I_{t0+Ts}, \alpha_{t0+Ts}) - \psi_{t0}(I_{t0}, \alpha_{t0})}{T_S}$$

Zur Ermittlung der Phasenspannung zum Zeitpunkt t0 sind bei o.a. Verfahren also lediglich Informationen über die Flussverkettung $\psi_{pmx}(\alpha)$ der Permanentmagneten und der Induktivität $L(\alpha)$, die lediglich von einer mit Hilfe eines Lagedetektors zu bestimmenden Läuferlage abhängen, über die beiden Stützstellen des Phasenstroms zu den Zeitpunkten t0 und t0+Ts gemäß dem vorgegebenen Stromprofil, sowie des Wicklungswiderstands R notwendig.

Eine Idee des oben beschriebenen Verfahrens besteht darin, durch Vorgabe eines Stromprofils und durch geeignete Näherungsannahmen eine Phasenspannung zu ermitteln, die während eines Zeitfensters definierter Länge als konstante Spannung angelegt wird. Die vereinfachenden Annahmen sind beispielsweise, dass der Verlauf des Stroms gemäß dem Stromprofil zwischen zwei aufeinanderfolgenden Stützstellen als linear angenommen wird und dass die zwischen den beiden Stützstellen angelegte Spannung konstant ist.

Durch weitere Vereinfachungen, wie beispielsweise durch die Annahme, dass die Selbst- und Koppelinduktivität L, M lageunabhängig sind und für jede Phase identisch sind und dass die Flussverkettung der Permanentmagneten $\psi_{PM}$ lediglich von der Winkellage abhängig und ansonsten nicht von Betriebspunkten der elektrischen Maschine abhängig ist, kann die anzulegende Phasenspannung mit Hilfe der herkömmlichen Motorgleichung errechnet werden. Dies ermöglicht es in verbesserter Weise, ohne Durchführung einer Stromregelung ein Stromprofil in einer elektrischen Maschine lediglich durch eine Steuerung einzustellen.

**Patentansprüche**

1. Verfahren zum Betreiben einer mehrphasigen elektrischen Maschine (1) durch Anlegen von variablen Phasenspannungen ($U_x$), mit folgenden Schritten:

   - Bereitstellen eines Phasenstromprofils, das für jede Phase der elektrischen Maschine (1) einen Läuferlage abhängigen Verlauf des jeweiligen Phasenstroms ($I_x$) angibt;
   - Ermitteln der während eines vorgegebenen Zeitfensters anzulegenden konstanten Phasenspannung ($U_x$) für jede Phase abhängig von einer Phasenstromangabe, die einen linearisierten Verlauf des anzulegenden Phasenstroms ($I_x$) zwischen dem durch das Phasenstromprofil vorgegebenen Phasenstrom ($I_x$) der Phase zu Beginn des vorgegebenen Zeitfensters und der durch das Phasenstromprofil vorgegebene Phasenstrom ($I_x$) der Phase am Ende des vorgegebenen Zeitfensters angibt,

   wobei die anzulegende Phasenspannung ($U_x$) für jede Phase weiterhin abhängig von einer geschätzten Änderung eines jeweiligen magnetischen Flusses ($\psi_x$) ermittelt wird, wobei die Änderungen der magnetischen Flüsse ($\psi_x$) anhand der durch das Phasenstromprofil vorgegebenen Phasenströme ($I_x$) ermittelt werden.

**2.** Verfahren nach Anspruch 1, wobei der Verlauf des Phasenstroms ($I_{Soll}$) in dem vorgegebenen Zeitfenster als Mittelwert des Phasenstroms ($I_x$) in dem vorgegebenen Zeitfenster angegeben wird.

**3.** Verfahren nach Anspruch 2, wobei der Mittelwert des während des vorgegebenen Zeitfensters anzulegenden Phasenstroms ($I_x$) einer Phase ermittelt wird, indem die der durch das Phasenstromprofil vorgegebene Phasenstrom ($I_x$) der Phase zu Beginn des Zeitfenster und der durch das Phasenstromprofil vorgegebene Phasenstrom ($I_x$) der Phase am Ende des Zeitfensters addiert und halbiert werden.

**4.** Verfahren nach Anspruch 1, wobei die Phasenstromangabe einem durch das Phasenstromprofil vorgegebenen Phasenstrom ($I_x$) der Phase am Ende des Zeitfensters entspricht.

**5.** Verfahren nach Anspruch 1, wobei die Änderung eines magnetischen Flusses ($\psi_x$) weiterhin abhängig von der Läuferlage geschätzt wird.

**6.** Verfahren nach Anspruch 1, wobei die Änderung eines magnetischen Flusses ($\psi_x$) als Differenz eines geschätzten magnetischen Flusses ($\psi_x$) am Ende des vorgegebenen Zeitfensters und eines geschätzten magnetischen Flusses ($\psi_x$) zu Beginn des vorgegebenen Zeitfensters ermittelt wird.

**7.** Verfahren nach einem der Ansprüche 3 bis 4, wobei eine Läuferlage eines Läufers (4) der elektrischen Maschine (1) bestimmt wird, wobei die Änderung eines einer der Phasen zugeordneten magnetischen Flusses ($\psi_x$) durch die Summe einer Verkettung der magnetischen Flüsse ($\psi_x$) der Permanentmagneten (5), der von der Läuferlage abhängt, und der von den bestromten Phasenwicklungen (7) hervorgerufenen magnetischen Flüsse ($\psi_x$), die von der Läuferlage und von dem Phasenstrom ($I_x$) der Phase abhängen, ermittelt wird, wobei die von den bestromten Phasenwicklungen (7) hervorgerufenen magnetischen Flüsse ($\psi_x$) mit Hilfe der durch das Phasenstromprofil vorgegebenen Phasenströme ($I_x$) der Phase geschätzt werden.

**8.** Verfahren nach Anspruch 7, wobei bei dem Ermitteln der Änderung des einer der Phasen zugeordneten magnetischen Flusses ($\psi_x$) die von den bestromten Phasenwicklungen (7) hervorgerufenen magnetischen Flüsse ($\psi_x$) vernachlässigt werden, wenn die Drehzahl eine Drehzahlschwellenwert unterschreitet.

**9.** Verfahren nach einem der Ansprüche 4 bis 7, wobei die anzulegende Phasenspannung ($U_x$) einer Phase als Änderung eines der Phase zugeordneten magnetischen Flusses ($\psi_x$) dividiert durch die Zeitdauer des vorgegebenen Zeitfensters ermittelt wird.

**10.** Verfahren nach einem der Ansprüche 4 bis 7, wobei die anzulegende Phasenspannung ($U_x$) einer Phase als Summe der Änderung eines der Phase zugeordneten magnetischen Flusses ($\psi_x$) dividiert durch die Zeitdauer des vorgegebenen Zeitfensters und des Produkts des Mittelwerts des während des vorgegebenen Zeitfensters anzulegenden Phasenstromes ($I_x$) der Phase mit einem Wicklungswiderstand ermittelt wird,

**11.** Vorrichtung zum Betreiben einer mehrphasigen elektrischen Maschine (1) durch Bereitstellen von variablen Phasenspannungen ($U_x$), die ausgebildet ist,

- um ein Phasenstromprofil bereitzustellen, das für jede Phase der elektrischen Maschine, einen Läuferlage abhängigen Verlauf des jeweiligen Phasenstroms ($I_x$) angibt;
- um die während eines vorgegebenen Zeitfensters anzulegende konstante Phasenspannung ($U_x$) für jede Phase abhängig von einer Phasenstromangabe, die einen linearisierten Verlauf des anzulegenden Phasenstroms zwischen dem durch das Phasenstromprofil vorgegebenen Phasenstrom ($I_x$) der Phase zu Beginn des vorgegebenen Zeitfensters und der durch das Phasenstromprofil vorgegebene Phasenstrom ($I_x$) der Phase am Ende des vorgegebenen Zeitfensters angibt, und weiterhin abhängig von einer geschätzten Änderung eines jeweiligen magnetischen Flusses ($\psi_x$) zu ermitteln, wobei die Änderungen der magnetischen Flüsse ($\psi_x$) anhand der durch das Phasenstromprofil vorgegebenen Phasenströme ($I_x$) ermittelt werden.

**12.** Computerprogrammprodukt, das ein Computerprogramm enthält, das, wenn es auf einer Datenverarbeitungseinheit ausgeführt wird, ein Verfahren nach einem der Ansprüche 1 bis 10 ausführt.

**Claims**

1.  Method for operating a polyphase electric machine (1) by applying variable phase voltages ($U_x$), said method comprising the following steps:

    - providing a phase current profile which indicates a rotor-position-dependent profile of the respective phase current ($I_x$) for each phase of the electric machine (1);
    - calculating the constant phase voltage ($U_x$) to be applied during a predefined time window for each phase on the basis of a phase current indication, which indicates a linearized profile of the phase current ($I_x$) to be applied between the phase current ($I_x$), which is predefined by the phase current profile, of the phase at the beginning of the predefined time window and the phase current ($I_x$), which is predefined by the phase current profile, of the phase at the end of the predefined time window,

    wherein the phase voltage ($U_x$) to be applied for each phase is also calculated on the basis of an estimated change in a respective magnetic flux ($\psi_x$), wherein the changes in the magnetic fluxes ($\psi_x$) are calculated on the basis of the phase currents ($I_x$), which are predefined by the phase current profile.

2.  Method according to Claim 1, wherein the profile of the phase current ($I_{set}$) in the predefined time window is indicated as the mean value of the phase current ($I_x$) in the predefined time window.

3.  Method according to Claim 2, wherein the mean value of the phase current ($I_x$), to be applied during the predefined time window, of a phase is calculated by the phase current ($I_x$), which is predefined by the phase current profile, of the phase at the beginning of the time window and the phase current ($I_x$), which is predefined by the phase current profile, of the phase at the end of the time window being added and halved.

4.  Method according to Claim 1, wherein the phase current indication corresponds to a phase current ($I_x$), which is predefined by the phase current profile, of the phase at the end of the time window.

5.  Method according to Claim 1, wherein the change in a magnetic flux ($\psi_x$) is also estimated on the basis of the rotor position.

6.  Method according to Claim 1, wherein the change in a magnetic flux ($\psi_x$) is calculated as the difference between an estimated magnetic flux ($\psi_x$) at the end of the predefined time window and an estimated magnetic flux ($\psi_x$) at the beginning of the predefined time window.

7.  Method according to either of Claims 3 and 4, wherein a rotor position of a rotor (4) of the electric machine (1) is determined, wherein the change in a magnetic flux ($\psi_x$) assigned to one of the phases is calculated by the sum of a linkage of the magnetic fluxes ($\psi_x$) of the permanent magnets (5), which are dependent on the rotor position, and the magnetic fluxes ($\psi_x$) which are caused by the energized phase windings (7) and are dependent on the rotor position and on the phase current ($I_x$) of the phase, wherein the magnetic fluxes ($\psi_x$) which are caused by the energized phase windings (7) are estimated using the phase currents ($I_x$), which are predefined by the phase current profile, of the phase.

8.  Method according to Claim 7, wherein the magnetic fluxes ($\psi_x$) which are caused by the energized phase windings (7) are ignored during the calculation of the change in the magnetic flux ($\psi_x$) assigned to one of the phases if the speed falls below a speed threshold value.

9.  Method according to one of Claims 4 to 7, wherein the phase voltage ($U_x$) to be applied of a phase is calculated as a change in a magnetic flux ($\psi_x$) assigned to the phase divided by the duration of the predefined time window.

10. Method according to one of Claims 4 to 7, wherein the phase voltage ($U_x$) to be applied of a phase is calculated as the sum of the change in a magnetic flux ($\psi_x$) assigned to the phase divided by the duration of the predefined time window and the product of the mean value of the phase current ($I_x$), to be applied during the predefined time window, of the phase and a winding resistance.

11. Device for operating a polyphase electric machine (1) by providing variable phase voltages ($U_x$), which device is designed:

- to provide a phase current profile which indicates a rotor-position-dependent profile of the respective phase current ($I_x$) for each phase of the electric machine,
- to calculate the constant phase voltage ($U_x$) to be applied during a predefined time window for each phase on the basis of a phase current indication, which indicates a linearized profile of the phase current to be applied between the phase current ($I_x$), which is predefined by the phase current profile, of the phase at the beginning of the predefined time window and the phase current ($I_x$), which is predefined by the phase current profile, of the phase at the end of the predefined time window, and also on the basis of an estimated change in a respective magnetic flux ($\psi_x$), wherein the changes in the magnetic fluxes ($\psi_x$) are calculated on the basis of the phase currents ($I_x$), which are predefined by the phase current profile.

**12.** Computer program product, which contains a computer program and, when it is run on a data processing unit, implements a method according to one of Claims 1 to 10.

**Revendications**

**1.** Procédé de conduite d'une machine électrique (1) polyphasée par application de tensions de phase ($U_x$) variables, le procédé comportant les étapes suivantes :

préparation d'un profil de courant de phase qui indique pour chaque phase de la machine électrique (1) l'évolution du courant ($I_x$) de chaque phase en fonction de la position de l'induit, détermination de la tension de phase ($U_x$) constante à appliquer sur chaque phase pendant une fenêtre temporelle prédéterminée en fonction d'une donnée de courant de phase qui donne l'évolution linéarisée du courant de phase ($I_x$) qui doit être appliqué, entre le courant de phase ($I_x$) prédéterminé par le profil de courant de phase au début de la fenêtre temporelle prédéterminée et le courant de phase ($I_x$) prédéterminé par le profil de courant de phase à la fin de la fenêtre temporelle prédéterminée, la tension de phase ($U_x$) à appliquer sur chaque phase étant en outre déterminée en fonction d'une modification estimée du flux magnétique ($\psi_x$), les modifications du flux magnétique ($\psi_x$) étant déterminées à l'aide des courants de phase ($I_x$) prédéterminés par le profil de courant de phase.

**2.** Procédé selon la revendication 1, dans lequel l'évolution du courant de phase ($I_{Soll}$) pendant la fenêtre temporelle prédéterminée est donnée comme valeur moyenne du courant de phase ($I_x$) au cours de la fenêtre temporelle prédéterminée.

**3.** Procédé selon la revendication 2, dans lequel la valeur moyenne du courant de phase ($I_x$) à appliquer sur une phase pendant la fenêtre temporelle prédéterminée est déterminée en additionnant le courant de phase ($I_x$) prédéterminé par le profil de courant de phase au début de la fenêtre temporelle et le courant de phase ($I_x$) prédéterminé par le profil de courant de phase à la fin de la fenêtre temporelle et en divisant par deux.

**4.** Procédé selon la revendication 1, dans lequel la donnée de courant de phase correspond au courant de phase ($I_x$) prédéterminé par le profil de courant de phase à la fin de la fenêtre temporelle.

**5.** Procédé selon la revendication 1, dans lequel la modification du flux magnétique ($\psi_z$) est en outre estimée en fonction de la position de l'induit.

**6.** Procédé selon la revendication 1, dans lequel la modification du flux magnétique ($\psi_z$) est déterminée comme différence entre le flux magnétique ($\psi_z$) estimé à la fin de la fenêtre temporelle prédéterminée et d'un flux magnétique estimé ($\psi_x$) au début de la fenêtre temporelle prédéterminée.

**7.** Procédé selon l'une des revendications 3 et 4, dans lequel la position de l'induit (4) de la machine électrique (1) est déterminée, la modification du flux magnétique ($\psi_z$) associée à l'une des phase étant déterminée par la somme de la concaténation du flux magnétique ($\psi_z$) de l'aimant permanent (5), qui dépend de la position de l'induit, et du flux magnétique ($\psi_x$) provoqué par les enroulements (7) de la phase alimentée en courant, qui dépend de la position de l'induit et du courant de phase ($I_x$), le flux magnétique ($\psi_z$) provoqué par les enroulements (7) de la phase alimentée en courant étant estimé à l'aide des courants de phase ($I_x$) prédéterminés par le profil de courant de phase.

**8.** Procédé selon la revendication 7, dans lequel la détermination de la modification du flux magnétique ($\psi_z$) associée à l'une des phases néglige les flux magnétiques ($\psi_x$) provoqués par les enroulements (7) des phases alimentées en courant lorsque la vitesse de rotation n'atteint pas une valeur de seuil de vitesse de rotation.

9. Procédé selon l'une des revendications 4 à 7, dans lequel la tension de phase ($U_x$) à appliquer sur une phase est déterminée comme modification du flux magnétique ($\psi_x$) associé à la phase divisée par la durée de la fenêtre temporelle prédéterminée.

10. Procédé selon l'une des revendications 4 à 7, dans lequel la tension de phase ($U_x$) à appliquer sur une phase est déterminée comme somme de la modification du flux magnétique ($\psi_x$) associé à la phase, divisée par la durée de la fenêtre temporelle prédéterminée et du produit de la valeur moyenne du courant de phase ($I_x$) qui doit être appliqué pendant la fenêtre temporelle prédéterminée et d'une résistance d'enroulement.

11. Ensemble de conduite d'une machine électrique polyphasée (1) par préparation de tensions variables de phases ($U_x$), l'ensemble étant configuré pour
préparer un profil de courant de phase qui indique pour chaque phase de la machine électrique (1) l'évolution du courant ($I_x$) de chaque phase en fonction de la position de l'induit,
déterminer la tension de phase ($U_x$) constante à appliquer sur chaque phase pendant une fenêtre temporelle prédéterminée en fonction d'une donnée de courant de phase qui donne l'évolution linéarisée du courant de phase ($I_x$) qui doit être appliqué, entre le courant de phase ($I_x$) prédéterminé par le profil de courant de phase au début de la fenêtre temporelle prédéterminée et le courant de phase ($I_x$) prédéterminé par le profil de courant de phase à la fin de la fenêtre temporelle prédéterminée, et en outre en fonction d'une modification estimée du flux magnétique ($\psi_x$), les modifications du flux magnétique ($\psi_x$) étant déterminées à l'aide des courants de phase ($I_x$) prédéterminés par le profil de courant de phase.

12. Produit de programme informatique qui contient un programme informatique qui, lorsqu'il est exécuté sur une unité de traitement de données, met en oeuvre un procédé selon l'une des revendications 1 à 10.

Fig. 1

# Fig. 2a

# Fig. 2b

# Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007026241 A
- JP 2001113082 B